# EUROPEAN PATENT APPLICATION

(11) **EP 0 661 336 A1**
(43) Date of publication of application: **05.07.1995**
(21) Application number: 94309864.0
(22) Date of filing: 28.12.1994
(51) Int. Cl.: C08J 5/18, B29C 55/00, B01D 71/36, B01D 67/00

(54) **A porous polytetrafluoroethylene film and a manufacturing method therefor**

(30) Priority: 28.12.1993 JP 350542/93
(71) Applicant: JAPAN GORE-TEX, INC., Setagaya-ku Tokyo-To 156 (JP)
(72) Inventor: Morishita, Katsuhiko, Okayama-Shi, Okayama-Ken 703 (JP); Matsuda, Osamu, Okayama-Shi, Okayama-Ken 703 (JP)
(74) Representative: McCallum, William Potter

(57) **Abstract**

This invention provides a porous film that is the product of stretching a PTFE molded article in an unsintered state and that is composed of a fiber structure in which large nodules are essentially not present.

The film is drawn biaxially at a surface area draw ratio of at least 45 times at a drawing rate of no more than 100% per second, and preferably at a rate of no more than 50% per second, and even more preferably at a rate of no more than 20% per second, at a heating temperature below 327°C. The product can be sintered by heating at a temperature of 327°C or higher.

## Description

The present invention concerns a polytetrafluoroethylene (hereinafter referred to as PTFE) porous film, and a manufacturing method thereof. The PTFE porous film pertaining to the present invention is used, for example, as an excellent air filter material in clean rooms, in the semiconductor industry, and pharmaceutical industry.

Various means are known for preparing porous expanded polytetrafluoroethylene (ePTFE) by paste molding which is an extruded molding (sometimes also molded by rolling) a polytetrafluoroethylene (PTFE) fine powder and a lubricant, by drawing the molded article after the lubricant has been removed. These technologies can be classified into three categories according to how the article is heated during drawing: 1) methods in which the molded article is drawn in an unsintered state (such as in Japanese Patent Publications 42-13560, 51-18991, 56-45773, and 56-17216), 2) methods in which it is drawn in a sintered state (such as in Japanese Laid-Open Patent Applications 53-55378, 55-55379, 59-109534, and 61-207446), and 3) methods in which it is drawn in a semi-sintered state (such as in Japanese Laid-Open Patent Applications 58-145735, 59-152825, and 3-221541). In every case, the drawing is carried out at a heating temperature below the melting point of PTFE (327°C), but in some cases the article is drawn while undergoing heat treatment.

Of these technologies, method 1, in which the molded article is drawn in an unsintered state, was the first to be employed in this field of technology. This method basically involved first evaporating away (drying) the liquid lubricant from a PTFE paste molded article, and then drawing (i.e, stretching) the article at a relatively high speed in the direction of one or more axes at a heating temperature below the melting point of PTFE and with the article still in an unsintered state. A porous PTFE product manufactured by this method has a fiber structure containing large nodules (larger than 1 µm in size) that are linked together by extremely small fibers, has a porosity of 40 to 97%, and is extremely high in strength. The benefit of this method is that there is almost no reduction in the thickness of the molded article when the draw ratio is raised. This means that raising the draw ratio results in an increase in the number and size of the spaces produced by the surrounding nodules and fibers. In other words, the only thing that happens as the draw ratio is raised is that the pore space increases, the space grows, and the porosity increases.

Method 2, in which the molded article is drawn in a sintered state, involves drawing the molded article after it has been heated and sintered at a temperature above the melting point of PTFE, or while it is being heated and sintered above the melting point. With this method, however, drawing is only possible in the direction perpendicular to the rolling direction, and it is generally difficult to manufacture a porous product with a high porosity.

Method 3, in which the molded article is drawn in a semi-sintered state, involves heat treating the molded article prior to drawing, achieving a specific "semi-sintered state" as defined in Japanese Laid-Open Patent Application 59-152825, and then drawing in the direction of two or more axes. The characteristic of this method is that the pore space decreases as the draw ratio goes up, which produces an extremely thin film having a structure composed of fibers, with essentially no large nodules. For instance, according to Japanese Laid-Open Patent Application 5-202217, a PTFE porous film fabricated by this method is a porous film having a structure composed solely of fibers, with essentially no large nodules, and the average pore size thereof is usually extremely small (0.5 to 0.2µm). Another characteristic is that the film thickness decreases to about 1/20th to 1/100th thickness of the molded article prior to drawing. With this method, however, the temperature range in which a "semi-sintered state" that is favorable for subsequent drawing can be obtained is extremely narrow, and for practical purposes it is virtually impossible to realize such a state.

As discussed above, up to now it was believed that the product of a method in which a PTFE molded article is drawn in an unsintered state is a thick porous film that has a relatively large pore diameter, and that has a fiber structure composed of nodules that are linked together by fibers, while the product of a method in which the article is drawn in a semi-sintered state is an extremely thin film that has a small pore diameter, and that has a structure composed solely of fibers, with essentially no large nodules. In other words, it was believed until now that an extremely thin film that has a small pore size, and that has a structure composed solely of fibers, essentially no large nodules, could not be manufactured with any method but one in which the molded article is drawn in a semi-sintered state, as discussed in Japanese Laid Open Patent Application 5-202217. For example, it was believed that with a method in which the article was drawn in an unsintered state, reducing the pore size would required the draw ratio to be reduced.

Japanese Patent Publication 58-45773 concerns a method for manufacturing a rod or film by drawing to a high draw ratio at least 50 times the original length by a method in which the article is drawn in an unsintered state. However, the objective of this invention is to manufacture a high-strength, highly porous substance, but the "porous substance" in this instance means one with a structure composed of fibers and nodules. Also, to obtain such a porous substance, drawing at a rate in excess of 2000% per second is a requisite condition. In contrast, one objective of the present invention is to mold, by drawing in an unsintered state, a porous film with a structure composed substantially of fibers, with essentially no large nodules, and as the means thereof, drawing at a rate of no more than 100% per second, and preferably at a rate of no more than 50% per second, and even more preferably at a rate of no more than 20% per second, is a requisite condition.

The process in which a porous product is prepared by drawing a PTFE fine powder in an unsintered state via paste molding will now be briefly discussed. A PTFE with a low amorphous content and a degree of crystallization of at least 98% is considered to be the PTFE fine powder that is best suited to this method. When such a PTFE fine powder is mixed with a mineral spirit, naphta, or another such lubricant, it absorbs this lubricant and turns into a paste. It is well known that this PTFE paste can be economically molded by extrusion molding, calender molding, or another molding method that imparts shear deformation. The paste is usually molded into a tube, a rod, a tape, or some other such cross sectional shape. After molding, the lubricant is removed from the molded article, usually by drying. Then, after the lubricant has been removed, the molded article is drawn, i.e., stretched, to give it a porous structure. With the method that involves drawing in an unsintered state, the molded article from which the lubricant has been removed is drawn in the direction of one or more axes at a temperature below the melting point of PTFE, and preferably at a high temperature near, but below, the melting point. After drawing, the porous molded article usually is heated to a temperature over the melting point of PTFE and then cooled, in order to fix the microstructure of the article. The degree of sintering of the product is controlled by adjusting the maximum temperature or the length of time at which the article is kept at this temperature as dictated by the intended use of the finished product. Depending on the application, there are cases in which no sintered treatment whatsoever is performed.

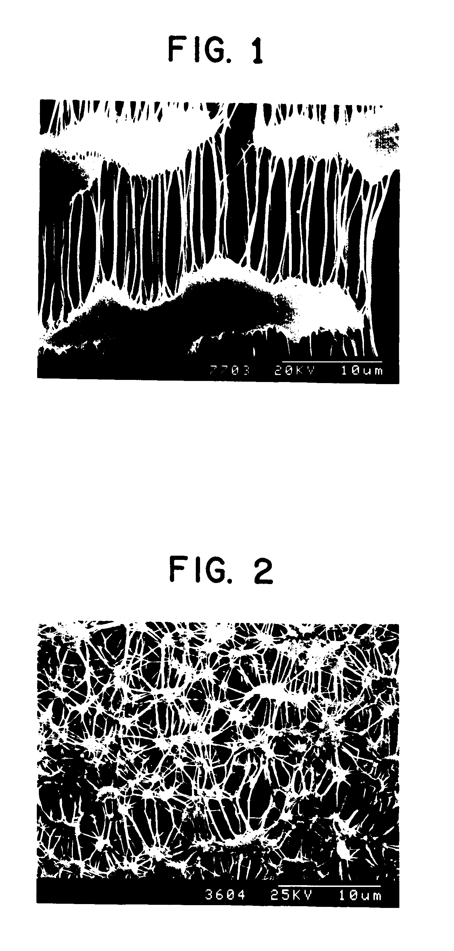

A molded article produced by drawing in an unsintered state becomes porous, but the microstructure thereof is affected by the drawing temperature, drawing rate, draw ratio, and other factors. This structure is composed of a microstructure of a vast number of fibers and nodules that are linked together by these fibers, and the size and arrangement of these nodules will vary with the drawing conditions. For instance, if the article is drawn uniaxially, the nodules will be arranged in the form of islands at a right angle to the drawing direction, and the fibers that link the nodules together will be arranged parallel to the drawing direction. And when the article is drawn biaxially, the nodules will consist of particles or an aggregation of a few to hundreds of particles of fine powder, and the fibers that link them together will be oriented two-dimensionally from the nodules, with the degree of this orientation varying with the drawing conditions. With conventional porous films, the fiber diameter is very fine (approximately 0.1 µm), and nodules are very large, in some cases reaching approximately 400 µm. Figure 1 shows an electron micrograph of a typical example of a fiber structure formed by this uniaxial drawing.

A characteristic of this approach to making a porous article by drawing in an unsintered state is that the size in the direction at a right angle (perpendicular direction) to the molded article drawing direction does not vary in the drawing process. In other words, there is only minimal change in the thickness and width of the molded article with uniaxial drawing, and in the thickness of the molded article with biaxial drawing. This indicates that an increase in volume is the result of an increase in porosity, i.e., a decrease in density. This increase in porosity is caused by an increase in the voids, i.e., the space, between the nodules, and by the larger space that is created as the number and length of fine fibers increase. Consequently, with a method that involves drawing in an unsintered state it is fundamentally difficult to manufacture a film that is thinner than the original molded article.

An object of the present invention is to provide a porous film that is the product of drawing a PTFE molded article in an unsintered state and that is composed of a fiber structure in which large nodules are essentially not present.

According to the present invention there is provided an unsintered stretched polytetrafluoroethylene porous film comprised of a multitude microstructure of nodes interconnected by fibrils, in which the nodes have an average size not greater than that of a circle with a diameter of 1 micrometer. Said polytetrafluoroethylene porous film is characterized by being composed of a fiber structure in which nodules whose average size is larger than a circle with a diameter of 1 µm are essentially not present in the surface morphology revealed by scanning electron microscope observation. In other words, the film is substantially free of nodes larger than about 1 µm. Once the unsintered product is obtained, it can be sintered by heating at a temperature of 327°C or more.

According to a further aspect of the present invention there is provided a process for preparing an unsintered stretched polytetrafluoroethylene film which comprises stretching an unsintered polytetrafluoroethylene film biaxially at a stretching rate of no more than 100% per second and in which the film is stretched at a surface area draw ratio of at least 45 times.

Preferably the film is biaxially stretched at a rate of no more than 50% per second. Even more preferably the film is biaxially stretched at a rate of no more than 20% per second, at a heating temperature below 327°C. The product can be sintered by heating at a temperature of 327°C or higher.

Embodiments of the present invention will now be described, by way of example, with reference to the accompanying drawings which illustrate scanning electron microscope observations (SEMs) at magnifications of 3000 times. In the Figures:-

Figure 1 is an SEM image of a typical PTFE (uniaxially) drawn porous film.

Figure 2 is an SEM image of a typical PTFE (biaxially) drawn porous film.

Figure 3 is an SEM image of the PTFE porous film manufactured in Example 1.

Figure 4 is an SEM image of the PTFE porous film manufactured in Example 2.

Figure 5 is an SEM image of the PTFE porous film manufactured in Example 3.

Figure 6 is an SEM image of the PTFE porous film manufactured in Example 4.

Figure 7 is an SEM image of the PTFE porous film manufactured in Example 5.

Figure 8 is an SEM image of the PTFE porous film manufactured in Example 8.

To manufacture the PTFE molded article, a PTFE fine powder that has a low amorphous content and a degree of crystallization of at least 98% is used as the raw material. This PTFE fine powder is made into a paste by uniformly mixing it with a mineral spirit, naphtha, or other such lubricant. This paste is then molded into the shape dictated by the intended use of the finished product by a molding method that imparts shear deformation, such as extrusion molding or calender molding. It is usually molded into the form of a tape, but the shape is not necessarily limited to this, and the article may be molded into a variety of cross sectional shapes, such as a rod or tube, according to the intended use of the finished product. After molding, the lubricant is removed from the molded article by drying. This drying may be accomplished by a method in which the artide is heated to over the boiling point of the lubricant to remove the lubricant, or the lubricant may be entrained with air, nitrogen, or another gas, or in some cases drying under reduced pressure is possible. Another method that can be employed is to elute away the lubricant with an eluant that is miscible with the lubricant and has a lower boiling point than the lubricant, and then dry this product. The molded article is now ready to be drawn into the porous film of the invention.

To make the porous film of the invention, the molded article may be given a preliminary uniaxial draw (but this is not required) and then is drawn biaxially at a temperature below 327°C (the melting point of PTFE), and preferably within a temperature range of 200 to 320°C. In the drawing, a relatively slow drawing rate of no more than 100% per second, and preferably a rate of no more than 50% per second, and even more preferably a rate of no more than 20% per second, is employed. The biaxial drawing is performed such that the increase in surface area over the original surface area of the molded article will be at least 50 times. The drawing may be performed simultaneously or in multiple stages (e.g., two or three stages) in which the molded article is re-positioned on the pin frame of the drawing machine, in which case the article may be drawn at the conventional rapid drawing rate in the first stage, and then drawn at the relatively slow drawing rate of the present invention in the second stage. In short, relatively slow drawing rate of the present invention must be employed in the final stage of drawing. How many drawing stages are employed is determined after giving thought to economic considerations. This drawing forms a porous film having a distinctive structure in which large nodules are essentially not present. If needed, this porous film may be subject to a sintering treatment, in which it is first heated to a temperature over 327°C and then cooled, in order to fix the microstructure thereof, but this is not always necessary, and sometimes there is no sintering carried out at all.

The "drawing rate" referred to herein is defined as the move-away rate (percent per second) of the drawing frames with respect to the initial distance between the frames prior to drawing in cases in which the drawing is accomplished by moving opposing pin frames apart, and is defined by the rotational speed difference (percent per second) of the rolls with respect to the distance between the rolls in cases in which the drawing is performed between a pair of opposing rolls of different speeds.

The "draw ratio" referred to herein is defined as the ratio (times) of the final distance between the frames after drawing with respect to the initial distance between the frames prior to drawing, or by the proportional (percent) distance that the molded article has been stretched with respect to the initial distance between the frames prior to drawing (the value obtained by subtracting the initial distance between the frames prior to drawing from the final distance between the frames after drawing), in cases in which the drawing is accomplished by moving opposing rolls of different speeds.

The PTFE porous film of the present invention is composed of a fiber structure in which nodules whose average size is larger than a circle with a diameter of 1 µm are essentially not present in the surface morphology revealed by scanning electron microscope (SEM) observation. As mentioned above, a porous film produced by drawing in an unsintered state by a conventional method is characterized by the presence of numerous nodules of large size, but these large nodules that are seen in conventional porous films are essentially not present in the porous film of the present invention. It is true that in the porous film of the present invention there exists portions of the fibers where the diameter is greater than the fiber diameter, such as places where the fibers bend and fold, places where the fibers branch, and centers from which fibers extend radially. However, these large diameter portions are essentially different from the large nodules seen in conventional porous films, and actually should probably be excluded from the scope of "nodules" referred to in the past, but since it is difficult to make a clear distinction between these portions and conventional nodules, they are described herein as nodules for the sake of convenience.

With the porous film of the present invention, the average size of the nodules is 1 µm or less, and is smaller than a circle with a diameter of 1 µm. Here, the size of the nodules is determined by measurement with SEM photography. When the size of the nodules is determined, it is determined statistically based on an SEM image in which an area ranging from approximately 1200 µm² to 500 µm², and preferably 880 µm², arbitrarily or randomly selected from the SEM field of vision fills the entire field of vision.

Also, this size should not be determined from a field that is extremely atypical, and must instead be determined based on a field that is average from an ordinary, normal perspective. The size of the nodules in the SEM image may be measured by a mechanical or electronic method such as one that makes use of an image analyzer, or may be measured manually, but manual measurement is more common. An "average of 1 µm or less" refers to an average numerical value in the statistical sense, and this should not be skewed by using atypical numerical values. It has already been stated that the average size of the nodules is 1 µm or less, but in actually evaluating the nodules, there are infrequent cases in which it is difficult to judge where the boundary is between the nodules and the fibers, or in which it is difficult to judge if the nodules are larger than the 1 µm circle because the nodules are long and narrow and the minor axis fits within the circle, but the major axis sticks out, or other cases in which an actual decision is difficult. In such cases the decision should be made based on the following. A nodule is deemed larger than a circle with a diameter of 1 µm if there is a place present anywhere on the nodule (including in some case the fiber portion when the boundary with the nodule is unclear) that goes beyond the circle with a diameter of 1 µm.

Furthermore, it is not appropriate to make an evaluation using the surface area ratio between the fibers and nodules, or using the percentage of surface area accounted for by the nodules. The reason for this is that it is difficult to distinguish points where the fibers merely intersect or merge, or points where the fibers bend and fold, from the nodules. Another reason is that the porous film of the present invention is extremely thin, but it nevertheless has a three dimensional structure, and the film becomes thinner as the draw ratio goes up, and as a result, overlapping of fibers, etc., increases in the SEM field and the number of nodules fluctuates.

Of the nodules present in the fiber structure that constitutes the porous film of the present invention, the number of large nodules that exceed 1 µm in size is about zero or one per 880 µm² of photographed surface area, or essentially zero, as will be shown in the practical examples.

The average pore diameter in the porous film of the present invention is extremely small, and is usually less than 0.5 µm. There are no restrictions on the lower limit of the average pore diameter, but 0.1 µm is the most common diameter.

The PTFE porous film of the present invention could not have been obtained by the conventional method in which an article is drawn in an unsintered state, as is even pointed out in Japanese Laid-Open Patent Application 5-202217 and described further above. Therefore, the present invention offers something which was deemed impossible to manufacture in the past except by a method in which the article was drawn in a semi-sintered state, i.e., a thin PTFE porous film with the above-mentioned structure composed solely of fibers and with essentially no large nodules present, and also offers a novel method for effecting the manufacture of said film.

The PTFE porous film of the present invention can be used as an air filter, as a cell diaphragm, a humidifier diaphragm, or a pervaporation diaphragm. It can also be used as a fabric material that is used in applications that require a clean environment.

### EXAMPLES

The present invention will now be described in further detail by the following Examples. The "average pore diameter " referred to in these practical examples and in this specification is the mean flow pore size (MFP) measured with a Coulter Porometer (made by Coutler Electronics (U.S.)). "Film thickness" is a value measured using an SM-1201 model dial gauge made by Techlok (1/1000 mm film thickness gauge). Twelve porous films were laid one over the other, the total film thickness was measured, and this total film thickness was divided by the number of film sheets.

### Examples 1 through 5

An unsintered tape 0.2 mm thick and 150 mm wide, which had been manufactured from a PTFE fine powder (Polyflon Fine Powder F104, made by Daikin Industries) by the ordinary method consisting of paste extrusion, roll calendering, and lubricant drying, was drawn (first drawing) approximately five times (400%) in the lateral direction at a drawing temperature of 300°C and a drawing rate of 50% per second using a biaxial drawing machine, and then simultaneously drawn biaxially (second drawing) under the same conditions. In this second drawing, five different draw ratios were employed with the same ratio in each of the biaxial direction. Thus, a draw ratio of 2.0 times (100%) was used in Example 1; 3.0 times (200%) in Example 2; 4.5 times (350%) in Example 3; 6.0 times (500%) in Example 4, and 7.5 times (650%) in Example 5. The final surface area draw ratio, including initial drawing, was 5.0 x 2.0 x 2.0 = 20 times in Example 1; 45 times in Example 2; 101 times in Example 3; 180 times in Example 4; and 281 times in Example 5. After drawing, each film was fixed on all four sides and sintered by heating for five minutes at 370°C. Thus Examples 1 and 2 are not Examples of the invention.

In every example, the film thickness after drawing was much less compared to the original unsintered undrawn tape, and thickness decreased rapidly as the draw ratio went up. The surface of the films was observed by SEM after drawing, and the presence of some large nodules was evident when the surface area draw ratio was 45 times or less, but when 45 times was exceeded, there was a change to a structure composed almost solely of fibers, in which almost no large nodules were seen. Film strength increased as the surface area draw ratio went up. At a surface area draw ratio over 45 times, porosity was a nearly constant value regardless of the draw ratio. Also, the Gurley number decreased sharply as the surface area draw ratio went up.

### Reference Example 1

One of the porous films that had undergone the first drawing and were used in the second drawing in Practical Examples 1 through 5 was termed Reference Example 1. After the first drawing, this porous film was fixed on all four sides and sintered by heating for five minutes at 370°C.

### Table 1

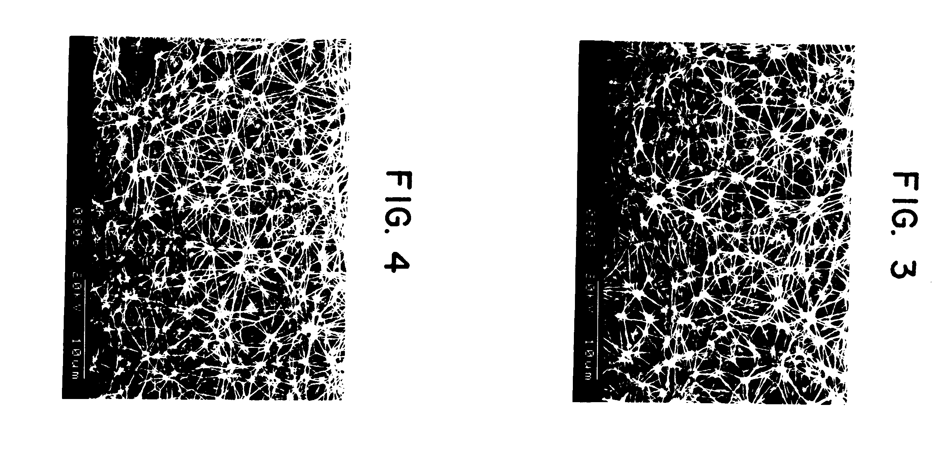

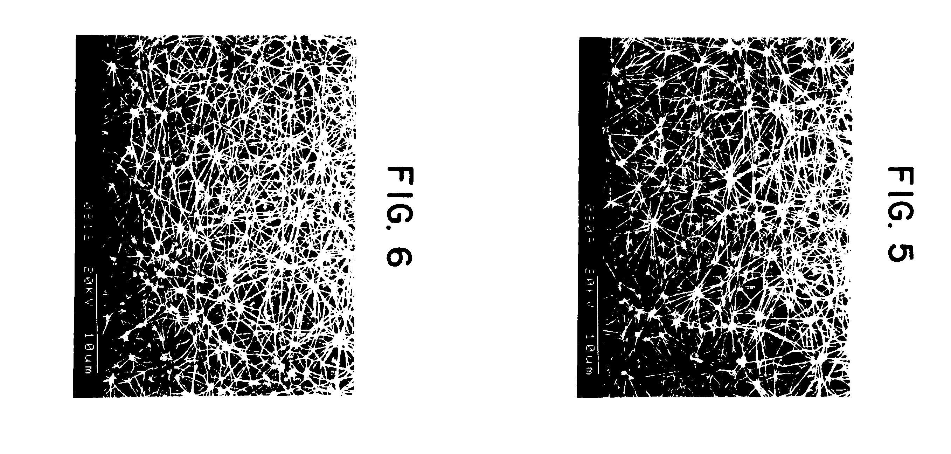

The drawing conditions in Examples 1 through 5 and Reference Example 1 are shown in Table 1. The properties of the porous films from Examples 1 through 5 are shown in Table 2, and SEM images of these films are shown in Figures 3 through 7. The fiber diameter in the porous films of Examples 1 through 5 were between 0.10 and 0.2 µm.

**TABLE 1**

| Symbol | Drawing Temp. (°C) | Drawing Rate (%/sec) | Draw Ratio of Second Drawing (in each direction) (%) | Surface Area Draw Ratio After First and Second Drawings (%) |
|---|---|---|---|---|
| EX. 1 | 300 | 50 | 100 | 1,900 |
| EX. 2 | 300 | 50 | 200 | 4,400 |
| EX. 3 | 300 | 50 | 650 | 10,000 |
| EX. 4 | 300 | 50 | 500 | 17,900 |
| EX. 5 | 300 | 50 | 650 | 28,000 |
| REF. EX. 1 | 300 | 50 | 0 | 400 |

**TABLE 2**

| Symbol | Final Film Thickness (µm) | MFP Average Pore Diameter (µm) | Number of Nodules Larger than a Circle with a Diameter of 1 µm (per 880 µm²) |
|---|---|---|---|
| EX. 1 | 21.3 | 0.18 | 11 |
| EX. 2 | 9.9 | 0.17 | 1 |
| EX. 3 | 4.6 | 0.19 | 0 |
| EX. 4 | 2.6 | 0.18 | 0 |
| EX. 5 | 1.7 | 0.18 | 0 |

### Examples 6 through 11

An unsintered and undrawn tape 0.2 mm thick and 150 mm wide, which had been manufactured from a PTFE fine powder (Fine Powder CD123, made by Asahi Glass) by the ordinary method consisting of paste extrusion, rolling, and lubricant drying, was drawn (first drawing) approximately five times in the lateral direction at a drawing temperature of 300°C and a drawing rate of 50% per second using a biaxial drawing machine, and then simultaneously drawn biaxially (second drawing) under the same conditions. All of the drawing was conducted at a temperature of 300°C, and there were six different, drawing rates: 10% per second with Examples 6; 25% per second with Example 7; 50% per second with Example 8; 75% per second with Example 9; 100% per second with Example 10; and 200% per second with Example 11. Drawing in each of the two biaxial directions was done to a draw ratio of 7.5 times, either simultaneously or successively. Specifically, the final surface area draw ratio in all of the practical examples was 5 x 7.5 x 7.5 - 281 times the original surface area of the unsintered undrawn tapes. After drawing, each film was fixed on all four sides and sintered by being heated for ten minutes at 380°C.

The film broke at the 200% per second drawing rate of Example 11, but no breakage occurred at the other drawing rates, and extremely thin films with a thickness of 10 µm or less were made. The film thickness in each case was greatly reduced compared to the original unsintered and undrawn tape. After drawing, the film surface was observed by SEM, and it was observed that each of these films had a structure composed almost solely of fibers, in which essentially no large nodules greater than 1 µm in size were seen. Film strength was greatly improved compared to the unsintered and undrawn tape.

### Reference Example 2

One of the porous films that had undergone the first drawing and were used in the second drawing in Examples 6 through 11 was termed Reference Example 2. After the first drawing, this porous film was fixed on all four sides and sintered by being heated for five minutes at 370°C.

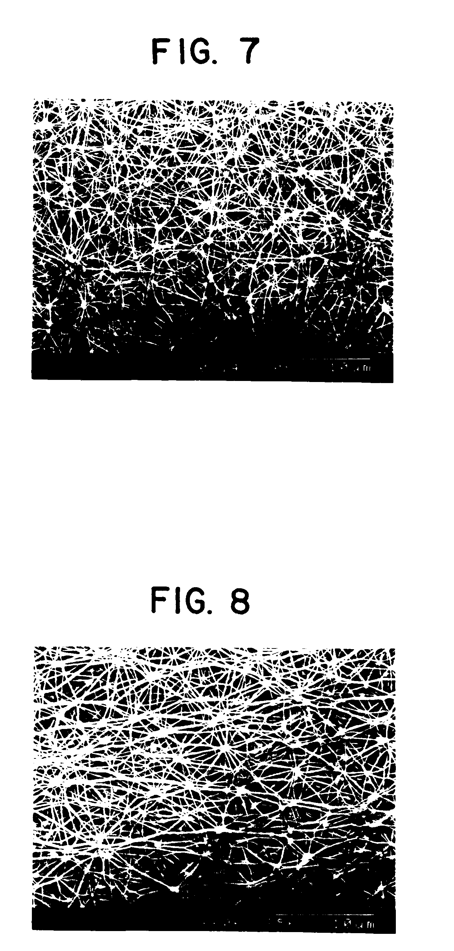

The drawing conditions in Examples 6 through 11 and Reference Example 2 are shown in Table 3. The properties of the porous films from Examples 6 through 11 are shown in Table 4. An SEM image of the porous film manufactured in Example 8 is shown in Figure 8.

**TABLE 3**

| Symbol | Drawing Temp. (°C) | Drawing Rate (%/sec) | Draw Ratio of Second Drawing (in each direction) (%) | Surface Area Draw Ratio After First and Second Drawings (%) | Drawing Order |
|---|---|---|---|---|---|
| EX. 6 | 300 | 10 | 650 | 28,000 | simultaneous |
| EX. 7 | 300 | 25 | 650 | 28,000 | simultaneous |
| EX. 8 | 300 | 50 | 650 | 28,000 | simultaneous |
| EX. 8a | 300 | 50 | 650 | 28,000 | successive X-Y |
| EX. 8b | 300 | 50 | 650 | 28,000 | successive X-Y |
| EX. 9 | 300 | 75 | 650 | 28,000 | simultaneous |
| EX. 10 | 300 | 100 | 650 | 28,000 | simultaneous |
| EX. 11 | 300 | 200 | 650 | 28,000 | simultaneous |
| REF. EX. 2 | 300 | 50 | 0 | 400 | - |

**TABLE 4**

| Symbol | Final Film Thickness (µm) | MFP Average Pore Diameter (µm) | Number of Nodules Larger than a Circle with a Diameter of 1 µm (per 880 µm²) |
|---|---|---|---|
| EX. 6 | 9 | 0.18 | 0 |
| EX. 7 | 4 | 0.31 | 0 |
| EX. 8 | 5 | 0,38 | 0 |
| EX. 8a | 5 | 0.57 | 0 |
| EX. 8b | 5 | 0.30 | 0 |
| EX. 9 | 6 | 0.25 | 0 |
| EX. 10 | 4 | 0.25 | 0 |
| EX. 11 | broke | - | 0 |

### Comparative Example 1

The fiber structure, of a porous film (Figure 2) manufactured by a method in which a molded article is drawn in an unsintered state, which is a conventional method, was compared with that of the porous film from Example 5 (Figure 7). The porous film manufactured with the conventional method was manufactured by using an unsintered and undrawn tape 0.2 mm thick and 150 mm wide, which had been manufactured from a PTFE fine powder (Polyflon, Fine Powder F104, made by Daikin industries) by the ordinary method consisting of paste extrusion, rolling, and lubricant drying, and then drawing this tape in a biaxial drawing machine at a drawing temperature of 300°C approximately six times at a drawing rate of 200% per second in the latetal direction of the tape and approximately six times at a drawing rate of 500% per second in the lengthwise direction of the tape. After drawing, this porous film was fixed on all four sides and sintered by being heated for five minutes at 370°C.

**TABLE 5**

| Symbol | Final Film Thickness (µm) | MFP Average Pore Diameter (µm) | Number of Nodules Larger than a Circle with a Diameter of 1 µm (per 880 µm²) |
|---|---|---|---|
| EX. | 1.7 | 0.18 | 0 |
| COMP. EX. 1 | 522.5 | 8 | 8 |

## Claims

1. An unsintered stretched polytetrafluoroethylene porous film comprised of a multitude microstructure of nodes interconnected by fibrils, in which the nodes have an average size not greater than that of a circle with a diameter of 1 micrometer.

2. A process for preparing an unsintered stretched polytetrafluoroethylene film which comprises stretching an unsintered polytetrafluorethylene film biaxially at a stretching rate of no more than 100% per second and in which the film is stretched at a surface area draw ratio of at least 45 times.

3. A process as claimed in claim 2 wherein the film is biaxially stretched at a rate of no more than 50% per second.

4. A process as claimed in claim 2 wherein the film is biaxially stretched at a rate of no more than 20% per second.

5. A process as claimed in any of claims 2 to 4 wherein the biaxial stretching is carried out simultaneously.

6. A process as claimed in any of claims 2 to 4 wherein the biaxial stretching is carried out in sequence.
